# EUROPÄISCHE PATENTANMELDUNG

(11) **EP 2 181 785 A1**
(43) Veröffentlichungstag der Anmeldung: **05.05.2010**
(21) Anmeldenummer: 08168273.4
(22) Anmeldetag: 04.11.2008
(51) Int. Cl.: B22F 9/08, B01J 2/10

(54) **Vorrichtung und Verfahren zur Granulierung einer Metallschmelze**

(71) Anmelder: Umicore AG & Co. KG, 63457 Hanau-Wolfgang (DE)
(72) Erfinder: Koenig, Veit, 63517 Rodenbach (DE); Huber, Andreas, 63826 Geiselbach (DE); Amend, Bernd, 36396 Steinau (DE)

(57) **Zusammenfassung**

Die Erfindung betrifft eine Vorrichtung und ein Verfahren zur Granulierung einer Metallschmelze. Die Vorrichtung besteht im wesentlichen aus einem runden Wasserbehälter, in das Wasser in tangentialer Richtung mit Hilfe mehrerer Düsen eingedüst wird, so daß das Wasser im Behälter rotiert und eine parabolische Oberfläche bildet. Die Düsen sind in der Höhe und am Umfang der Behälterwand verteilt angeordnet. Die oberste Düse befindet sich im Bereich der Wasseroberfläche und erzeugt einen in der Wasseroberfläche liegenden Wasserstrahl oder Wasserfächer. Zur Granulierung einer Metallschmelze wird diese aus einem Schmelztiegel kontinuierlich in den Wasserstrahl oder Wasserfächer der obersten Düse eingegossen.

## Beschreibung

Die vorliegende Erfindung befaßt sich mit der Granulierung einer Metallschmelze durch Eingießen der Schmelze in Wasser.

Es sind verschiedene Vorrichtungen und Verfahren zur Granulierung von Metallschmelzen oder geschmolzenen Schlacken mit Wasser bekanntgeworden. Die Granulierung erleichtert den weiteren Transport und die Verarbeitung der Schlacken und Metalle. Die Granulierung eines Metalles ist besonders dann vorteilhaft, wenn es mit anderen Metallen zu einer Legierung verarbeitet werden soll. Dann kommt es auf eine genaue Portionierung der Metalle an, die erleichtert wird, wenn die Metalle in granulierter Form vorliegen.

Die WO 01/55462 A1 beschreibt ein Verfahren zum Raffinieren von unreinem Rohsilber. Hierbei wird unreines Rohsilber mit Salpetersäure gelaugt. Die Laugung wird an granuliertem Rohsilber durchgeführt. Hierzu wird das geschmolzene Rohsilber in Wasser granuliert. Der Vorgang der Granulierung wird nicht weiter beschrieben.

Die WO 03/106012 beschreibt ein Verfahren und eine Apparatur zur Granulierung von geschmolzenem Metall. Bevorzugt wird das Verfahren zur Granulierung von geschmolzenem Silizium eingesetzt. Die Metallschmelze wird in einem kontinuierlichen Strahl ausgegossen. Der Strahl geschmolzenen Metalls wird durch Niederdruck Gasstrahlen in Metalltropfen zerteilt, die in strömendem Wasser abgekühlt und schließlich gesammelt werden.

Die EP 0 522 844 A2 beschreibt ebenfalls eine Methode zur Granulierung von geschmolzenem Metall. Hierbei handelt es sich im wesentlichen um eine geschmolzene Silizium/Magnesium-Legierung. Das geschmolzene Metall läßt man von einer Gießrinne in einen Wassertank fallen. Der Gießstrahl wird dadurch in Tropfen zerteilt, die erstarren und die Granalien bilden. In dem Wassertank wird ein im wesentlichen gleichmäßiger Wasserstrom erzeugt, der senkrecht zum Gießstrahl von einer Seitenwand des Wassertanks ausgeht. Die Strömungsgeschwindigkeit im Wasserstrom ist geringer als 0,1 m/s.

Die vorliegende Erfindung befaßt sich mit der Granulierung von hochwertigen Edelmetallen wie Gold, Silber, Platin, Palladium, Rhodium sowie Legierungen dieser Edelmetalle untereinander oder mit anderen Metallen. Diese Metalle oder Legierungen liegen aus verständlichen Gründen nur in kleinen Mengen vor, so daß für sie nur eine chargenweise Granulierung in Frage kommt, während die bekannten Verfahren zur Granulierung von zum Beispiel Schlacken eine kontinuierliche Granulierung größerer Mengen von Schlacke gewährleisten müssen. Darüber hinaus hat sich bei Versuchen der Erfinder gezeigt, daß es bei der Granulierung von Metallschmelzen, insbesondere bei der Granulierung der zuvor genannten Edelmetalle, beim Eingießen in einen mit Wasser gefüllten Behälter häufig zu heftigen Dampferuptionen und Auswurf des Wasserinhalts des Behälters kommt. Ursache hierfür ist die in der Metallschmelze gespeicherte hohe Wärmemenge.

Es war daher Aufgabe der Erfindung, eine Vorrichtung und ein Verfahren zur Verfügung zu stellen, mit welchem Edelmetalle in verhältnismäßig kleinen Mengen chargenweise mit geringem Aufwand granuliert werden können, ohne daß es zu den beobachteten Dampferuptionen kommt.

Diese Aufgabe wird gelöst mit der in Anspruch 1 definierten Vorrichtung und dem in Anspruch 11 angegebenen Verfahren. Bevorzugte Ausführungsformen der Vorrichtung und des Verfahrens sind in den entsprechenden Unteransprüchen beschrieben.

Die Vorrichtung (1) zur Granulierung einer Metallschmelze in Wasser enthält einen runden Wasserbehälter (2) mit einem Behälterboden (3), einer Behälterwand (4), einer Wasserzulaufvorrichtung (5) und mit einem an der Behälterwand in einer gewünschten Höhe über dem Behälterboden (3) angebrachten Wasserablauf (6), wobei die Wasserzulaufvorrichtung (5) ein Verteilerrohr (7) enthält, welches außerhalb des Wasserbehälters (2) angeordnet und mit einer ersten horizontal ausgerichteten Wasserdüse (8) verbunden ist, die von außen oberhalb des Wasserablaufs (6) durch die Behälterwand hindurchgeführt ist und mit welcher Wasser tangential in den Wasserbehälter (2) eindüst werden kann. Die Position des Wasserablaufs (6) am Umfang des Wasserbehälters (2) relativ zur ersten Düse (8) ist so gewählt, daß der Winkelversatz zwischen der ersten Düse (8) und dem Wasserablauf (6) wenigstens 90°, bevorzugt mehr als 180°, beträgt.

Im Betrieb wird der Behälter mit Wasser gefüllt, welches durch das tangentiale Eindüsen von Wasser in Rotation versetzt wird und dessen Oberfläche daher ein Rotationsparaboloid bildet. Das geschmolzene Metall wird zur Granulierung aus einem Schmelztiegel in den von der ersten Düse gebildeten Wasserkegel oder Wasserfächer eingegossen.

Bevorzugt weist das Verteilerrohr (7) weitere horizontale Wasserdüsen (9, 10, 11, 12, 13, 14) unterhalb der ersten Wasserdüse auf, die in verschiedenen Höhen über dem Behälterboden (3) angeordnet sind und das Wasser ebenfalls von außen tangential in den Wasserbehälter (2) eindüsen können. Diese zusätzlichen Düsen helfen, das Wasser im Wasserbehälter in Rotation zu versetzen und ermöglichen zusätzlich zum radialen Geschwindigkeitsprofil des rotierenden Wassers das vertikale Geschwindigkeitsprofil zu beeinflussen.

Die weiteren Wasserdüsen (9, 10, 11, 12, 13, 14) können zwischen dem Behälterboden und der ersten Wasserdüse (8) ungleichmäßig verteilt sein. Gute Ergebnisse wurden jedoch auch mit einer gleichmäßigen Verteilung der Wasserdüsen erreicht. Darüber hinaus hat es sich als vorteilhaft erwiesen, die Wasserdüsen (9, 10, 11, 12, 13, 14) nicht alle vertikal untereinander anzuordnen, sondern am Umfang des Wasserbehälters bevorzugt in gleichen Abständen beginnend mit der Umfangsposition der ersten Wasserdüse (8) zu verteilen. Dabei wird die jeweils tiefere Düse in Rotationsrichtung des Wassers nach vorne versetzt. Zweck dieser Maßnahme ist es, den im Wasser gebildeten Granalien einen ausreichend hohen horizontalen Impuls zu verleihen, so daß sie beim Herabsinken im Behälter in den Eindüsungsbereich der nächst tieferen Düse befördert werden. Dadurch werden die Granalien schnell über ein großes Wasservolumen verteilt. Dies vermindert die Gefahr der Ausbildung von Dampferuptionen. Der optimale Umfangsversatz zwischen zwei benachbarten Düsen hängt im wesentlichen von dem Metall selbst und der Rotationsgeschwindigkeit des Wassers ab und wird bevorzugt durch Versuche ermittelt. Dabei ist es vorteilhaft, die zweite Düse (9) noch senkrecht unter der ersten Düse (8) anzuordnen, um eine ausreichende horizontale Anfangsbeschleunigung der herabsinkenden Granalien zu erhalten. Durch einen ausreichenden Winkelversatz zwischen der ersten Düse (8) und dem Wasserablauf (6) wird sichergestellt, daß das granulierte Metall nicht in den Wasserablauf gelangen kann. Als weiteren Schutz vor Metallverlusten kann der Wasserablauf (6) noch durch ein Sieb abgedeckt werden. Die Erfahrungen mit der Granuliervorrichtung haben gezeigt, daß der Winkelversatz zwischen erster Düse und Wasserablauf wenigstens 90° betragen sollte. Bevorzugt wird ein Winkelversatz von mehr als 180° verwendet.

Die Anzahl der weiteren Wasserdüsen (9, 10, 11, 12, 13, 14) kann dem gewünschten Granulierergebnis angepaßt werden. Gute Ergebnisse wurden mit 2 bis 10, besonders mit 6 weiteren Wasserdüsen erzielt.

Die im Wasserbehälter tangential ausgerichteten Düsen sind mit dem Verteilerrohr (7) über Rohrleitungen verbunden, die vom Verteilerrohr am äußeren Umfang des Wasserbeckens bis zur jeweiligen Umfangsposition der Wasserdüsen entlanggeführt und dort durch die Behälterwand hindurchgeführt sind.

Die Düsen können durch die Rohrleitungen selbst gebildet sein und somit eine kreisrunde Düsenöffnung entsprechend dem Querschnitt der Rohrleitungen aufweisen. Bevorzugt werden die Düsenöffnungen jedoch als ovale Öffnungen oder als Schlitzöffnungen mit einer Längsausdehnung ausgeführt, die das Wasser in Form von breiten Fächern dem Wasserbecken zuführen. Bevorzugt ist die Öffnung der ersten Düse (8) so angeordnet, daß der erzeugte Wasserfächer in etwa parallel zur parabolischen Oberfläche des Wassers an der Position der ersten Düse ausgerichtet ist. Die Öffnungen der weiteren Düsen sind bevorzugt mit ihrer Längsausdehnung parallel zur Behälterwand ausgerichtet.

Zur Einstellung des vertikalen Geschwindigkeitsprofils ist es vorteilhaft, jeder Düse (8, 9, 10, 11, 12, 13, 14) ein Ventil (18) zwischen Düsenöffnung und Verteilerrohr (7) zur Einstellung des Wassermassendurchflusses zuzuordnen.

Die Wasserversorgung des Wasserbehälters wird bevorzugt als Kreislaufsystem ausgeführt. Zu diesem Zweck kann der Wasserablauf (6) des Wasserbehälters über eine Rücklaufleitung (17) mit dem Ansaugstutzen einer Wasserpumpe (18) verbunden werden, deren Druckstutzen über eine Vorlaufleitung (19) die Wasserzulaufvorrichtung (5) mit Wasser versorgt und somit den Kreislauf schließt.

Die Qualität des verwendeten Wassers sollte der von Trinkwasser entsprechen, so wie es als Leitungswasser von Wasserversorgungsunternehmen zur Verfügung gestellt wird. Ansonsten werden an das Wasser keine besonderen Anforderungen gestellt.

Mit der beschriebenen Vorrichtung können Edelmetalle in kleinen Chargen von 10 bis 50 kg granuliert werden. Hierzu wird der Wasserbehälter (2) zunächst mit Wasser befüllt. Dann wird das Wasser im Becken in Rotation versetzt, indem eine Teilmenge des Wassers im Kreis geführt und mit Hilfe einer Pumpe (18) und wenigstens einer Düse (8) tangential in den Wasserbehälter (2) eingedüst wird, wobei die Oberfläche des rotierenden Wassers im Behälter die Form eines Rotationsparaboloids (16) annimmt. Durch entsprechende Mengenregulierung des Wasserzulaufs kann die Rotationsgeschwindigkeit des Wassers so eingestellt werden, daß der Wasserspiegel (15) an der Behälterwand etwa bis zur Position der ersten Düse (8) ansteigt und die von der ersten Düse zugeführte Wassermenge in Form eines Fächers parallel zur parabolischen Oberfläche eingedüst wird. Typischerweise beträgt die Umfangsgeschwindigkeit des Wassers in der Nähe der Behälterwand etwa 0,5 bis 10 m/s. Das geschmolzene Metall wird dann durch Kippen des Schmelztiegels in einem kontinuierlichen Strahl in den Wasserfächer der ersten Düse gegossen bis der Schmelztiegel entleert ist. Die Gießgeschwindigkeit liegt bevorzugt im Bereich zwischen 10 und 30 kg/min. Dabei sollte darauf geachtet werden, daß der Schmelzstrahl möglichst immer an derselben Stelle auf den Wasserfächer der ersten Düse (8) trifft. Die Temperatur der Schmelze sollte 100 bis 300 °C über der Schmelztemperatur des Metalls liegen.

Bevorzugt wird das Wasser nicht nur mit einer Düse in den Wasserbehälter eingedüst, sondern mit mehreren Düsen (8, 9, 10, 11, 12, 13, 14), die in der Höhe und am Umfang des Wasserbehälters verteilt angeordnet sind.

Die Wassertemperatur vor Beginn der Granulierung sollte zwischen 10 und 30 °C liegen. Die für das Verfahren eingesetzte Wassermasse ist bevorzugt etwa 5 bis 50 mal so groß wie die zu granulierende Masse der Metallschmelze im Schmelztiegel. Dieses Massenverhältnis gewährleistet, daß sich das Wasser durch die vom Metall an das Wasser abgegebene Wärme nicht übermäßig erwärmt. Die im Kreis geführte Teilmenge des Wassers sollte so bemessen sein, daß die Gesamtmenge des Wassers in etwa 0,5 bis 5 Minuten einmal vollständig umgewälzt wird.

Nachdem die gesamte Metallschmelze ausgegossen ist, wird der Wasserkreislauf gestoppt, das Wasser im Behälter abgelassen oder abgepumpt und das gebildete Metallgranulat aus dem Behälter entnommen.

Mit dem beschriebenen Verfahren ist es möglich, die genannten Edelmetalle sicher und kostengünstig zu granulieren. Die Kornverteilung des Granulats kann in weiten Grenzen den Anwendungserfordernissen angepaßt werden. Dies geschieht durch Wahl der Gießgeschwindigkeit für die Metallschmelze, der Rotationsgeschwindigkeit des Wassers im Behälter und insbesondere der Geschwindigkeit, mit welcher das Wasser von der ersten Düse dem Behälter zugeführt wird. Bei hoher Geschwindigkeit des zugeführten Wassers werden im wesentlichen kompakte, nahezu kugelförmige Granalien mit Korngrößen zwischen etwa 0,5 und 5 mm erhalten, die sich gut für die Dosierung bei der Herstellung von Legierungen eignen. Bei geringerer Geschwindigkeit liefert das Verfahren dagegen große Granalien mit zerklüfteter Oberfläche, die vorteilhaft sind, wenn sie zum Beispiel durch Laugungsprozesse weiterbehandelt werden sollen. Bevorzugt liegt die Austrittsgeschwindigkeit des Wassers aus der ersten Düse (8) zwischen 5 und 15 m/s, je nach gewünschtem Granulierergebnis.

Die Erfindung wird im folgenden mit Hilfe der Figuren 1 bis 4 näher erläutert. Es zeigen:
- **Figur** 1**:**: Seitenansicht der Vorrichtung zur Granulierung einer Metallschmelze mit Wasserzulauf und Wasserablauf sowie Verteilerrohr
- **Figur 2**:: Sicht von oben in den Wasserbehälter mit der Anordnung der Wasserdüsen am Umfang des Wasserbehälters
- **Figur 3:**: Schnittansicht A-A durch den Wasserbehälter mit der vertikalen Anordnung der Wasserdüsen
- **Figur 4:**: Schematische Darstellung des Wasserkreislaufs der Granuliervorrichtung

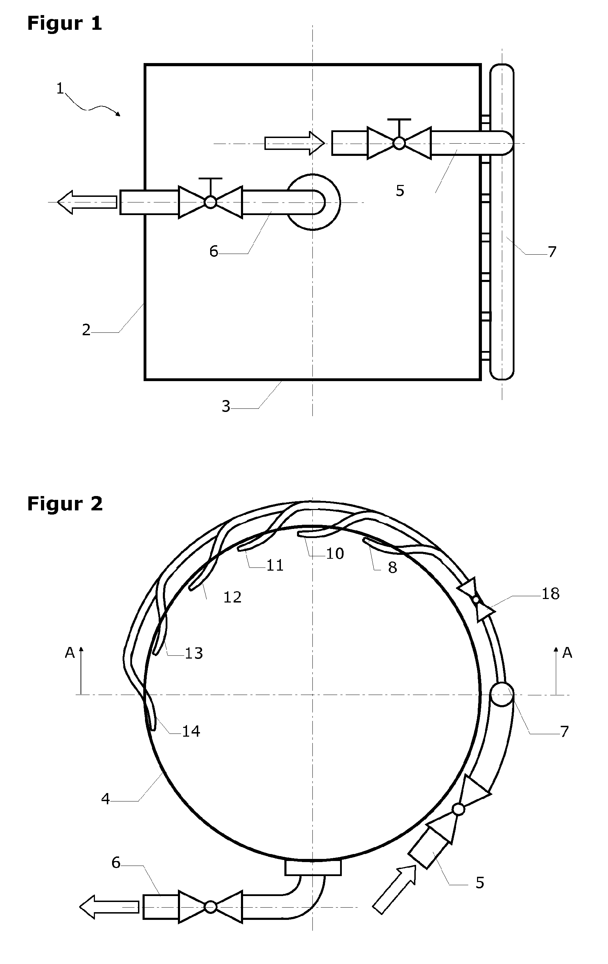

Figur 1 zeigt eine Vorrichtung (1) für die Granulierung von 1 bis 50 kg Edelmetall. Der Wasserbehälter (2) kann eine Nutzwassermenge von etwa 350 kg fassen. Der Wasserbehälter (2) ist mit einer Wasserzulaufvorrichtung (5) ausgerüstet, die ein Verteilerrohr (7) enthält, welches außerhalb des Wasserbehälters (2) senkrecht angeordnet ist und die hier nicht gezeigten Düsen mit Wasser versorgt, die von außen durch die Behälterwand (4) hindurchgeführt sind und Wasser tangential in den Wasserbehälter (2) eindüsen können. Unterhalb einer ersten Wasserdüse (8) ist ein Wasserablauf (6) angeordnet, um einen kontinuierlichen Kreislauf des Wassers zu ermöglichen. Wasserzulauf und Wasserablauf enthalten jeweils eine Ventil zur Regulierung der Durchflußmenge.

Figur 2 zeigt eine Ansicht auf die Granuliervorrichtung (1) von oben in den Wasserbehälter (2). Die Rohrleitungen zur Versorgung der Düsen (8, 9, 10, 11, 12, 13 und 14) mit Wasser sind außerhalb des Wasserbehälters horizontal um den Wasserbehälter herumgeführt. An den gewünschten Umfangsstellen sind die Rohrleitungen durch die Behälterwand (4) hindurchgeführt und münden in die tangential zur Behälterwand angeordneten Düsen.

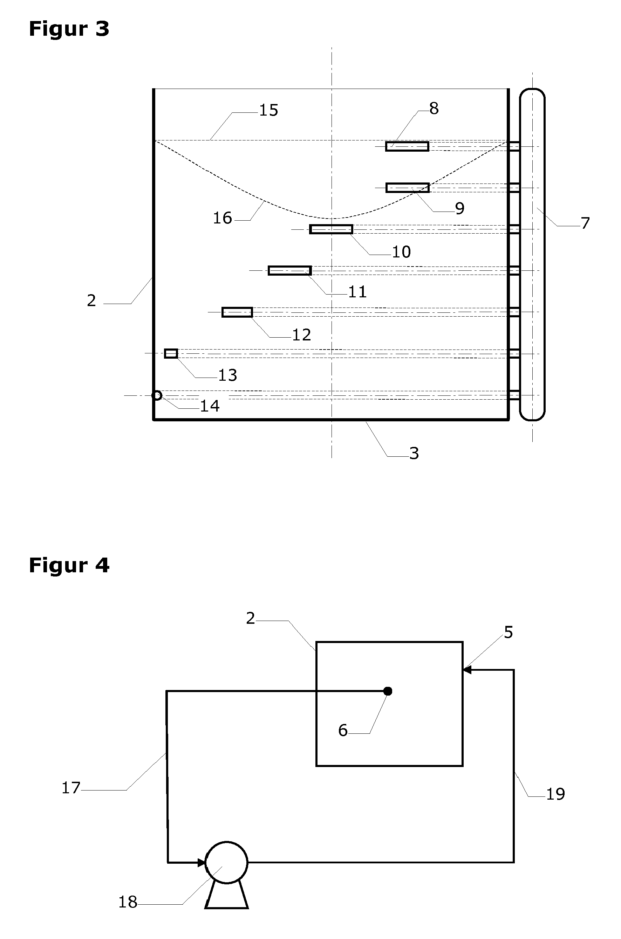

Figur 3 zeigt einen senkrechten Schnitt durch die Vorrichtung (1) in Richtung A-A von Figur 2. Figur 3 zeigt die Ausbildung der parabolischen Wasserfläche (16) im Betrieb der Vorrichtung. Der Rand (15) dieser Wasserfläche an der Behälterwand wird durch die Geschwindigkeit des Wasserzulaufs so eingestellt, daß er etwa bis an die oberste Düse (8) heranreicht oder leicht darüber hinaus ansteigt. Die weiteren Düsen werden in verschiedenen Höhen unterhalb der ersten Düse angeordnet, um das vertikale Geschwindigkeitsprofil des rotierenden Wassers einstellen zu können.

Figur 4 zeigt eine schematische Darstellung des schon beschriebenen Wasserkreislaufs der Granuliervorrichtung mit Hilfe der Wasserpumpe (18), deren Saugstutzen über die Wasserleitung (17) mit dem Wasserablauf (6) des Wasserbehälters (2) verbunden ist und deren Druckstutzen über die Wasserleitung (19) den Wasserzulauf (5) des Wasserbehälters mit Wasser versorgt.

### Beispiel

Zur Granulation von 25 kg Platin wurde ein Wasserbehälter aus Edelstahl mit einem Durchmesser von 85 cm und einer Höhe von 80 cm angefertigt. Wie in Figur 3 gezeigt, wurde der Behälter mit einer obersten Wasserdüse (8) und 6 weiteren Wasserdüsen ausgerüstet. Die weiteren Wasserdüsen wurden von oben nach unten um jeweils 20 Winkelgrade in Rotationsrichtung des Wassers zueinander versetzt.

Der Wasserbehälter wurde mit 300 Liter Leitungswasser mit einer Temperatur von 10 °C befüllt. Durch Einschalten der Pumpe (18) mit einer Förderleistung von 50 m³/h wurde das Wasser in Rotation versetzt bis der obere Rand des Wassers an der Behälterwand bis auf die Höhe der ersten Düse (8) gestiegen war. Dann wurde das geschmolzene und auf 2000 °C erhitzte Platin mit einer Rate von 20 kg/min in den von der ersten Wasserdüse (8) erzeugten Wasserfächer eingegossen. Die Granulation verlief problemlos ohne jegliche Dampferuptionen. Nach Beendigung des Eingießens wurde das Wasser abgepumpt und das Platingranulat aus dem Behälter entnommen.

## Patentansprüche

1. Vorrichtung (1) zur Granulierung einer Metallschmelze in Wasser, **enthaltend**
einen runden Wasserbehälter (2) mit einem Behälterboden (3), einer Behälterwand (4), einer Wasserzulaufvorrichtung (5) und mit einem an der Behälterwand in einer gewünschten Höhe über dem Behälterboden (3) angebrachten Wasserablauf (6), wobei die Wasserzulaufvorrichtung (5) ein Verteilerrohr (7) enthält, welches außerhalb des Wasserbehälters (2) angeordnet und mit einer ersten horizontal ausgerichteten Wasserdüse (8) verbunden ist, die von außen oberhalb des Wasserablaufs (6) durch die Behälterwand hindurchgeführt ist und mit welcher Wasser tangential in den Wasserbehälter (2) eindüst werden kann, wobei die Position des Wasserablaufs (6) am Umfang des Wasserbehälters (2) relativ zur ersten Düse (8) so gewählt ist, daß der Winkelversatz zwischen der ersten Düse (8) und dem Wasserablauf (6) wenigstens 90° beträgt.

2. Vorrichtung nach Anspruch 1,
**dadurch gekennzeichnet,**
**daß** das Verteilerrohr (7) weitere horizontale Wasserdüsen (9, 10, 11, 12, 13, 14) unterhalb der ersten Wasserdüse (8) aufweist, die in verschiedenen Höhen über dem Behälterboden (3) verteilt Wasser ebenfalls von außen tangential in den Wasserbehälter (2) eindüsen können.

3. Vorrichtung nach Anspruch 2,
**dadurch gekennzeichnet,**
**daß** die weiteren Wasserdüsen (9, 10, 11, 12, 13, 14) in verschiedenen Höhen über dem Behälterboden (3) und entlang des Umfangs der Behälterwand (4) verteilt Wasser von außen tangential in den Wasserbehälter (2) eindüsen können.

4. Vorrichtung nach Anspruch 3,
**dadurch gekennzeichnet,**
**daß** die weiteren Wasserdüsen (9, 10, 11, 12, 13, 14) in der Höhe gleichmäßig zwischen dem Behälterboden (3) und der ersten Wasserdüse (8) verteilt angeordnet sind.

5. Vorrichtung nach Anspruch 4,
**dadurch gekennzeichnet,**
**daß** die weiteren Wasserdüsen (9, 10, 11, 12, 13, 14) am Umfang in gleichen Abständen beginnend mit der Umfangsposition der ersten Wasserdüse (8) verteilt angeordnet sind.

6. Vorrichtung nach Anspruch 5,
**dadurch gekennzeichnet,**
**daß** neben der ersten Wasserdüse (8) 2 bis 10 weitere Wasserdüsen vorhanden sind.

7. Vorrichtung nach einem der vorstehenden Ansprüche,
**dadurch gekennzeichnet,**
**daß** die Düsenöffnungen der Wasserdüsen (8, 9, 10, 11, 12, 13, 14) durch ovale Öffnungen oder Schlitze mit einer Längsausdehnung gebildet sind, die Wasser in Form von breiten Fächern dem Wasserbehälter (2) zuführen können.

8. Vorrichtung nach Anspruch 7,
**dadurch gekennzeichnet,**
**daß** die Öffnung der ersten Düse (8) so angeordnet ist, daß der erzeugte Wasserfächer in etwa parallel zu einer parabolischen Oberfläche von in dem Wasserbehälter (2) rotierendem Wasser an der Position der ersten Düse ausgerichtet ist, während die Öffnungen der weiteren Düsen (9, 10, 11, 12, 13, 14) mit ihrer Längsausdehnung parallel zur Behälterwand (4) ausgerichtet sind.

9. Vorrichtung nach Anspruch 8,
**dadurch gekennzeichnet,**
**daß** jeder Düse ein Ventil (18) zwischen Düsenöffnung und Verteilerrohr (7) zur Einstellung des Wassermassendurchflusses zugeordnet ist.

10. Vorrichtung nach Anspruch 1,
**dadurch gekennzeichnet,**
**daß** das Wasser zur Granulierung einer Metallschmelze im Kreis geführt werden kann, indem der Wasserablauf (6) des Wasserbehälters (2) über eine Rücklaufleitung (17) mit einem Ansaugstutzen einer Wasserpumpe (18) verbunden ist, deren Druckstutzen über eine Vorlaufleitung (19) die Wasserzulaufvorrichtung (5) mit Wasser versorgt.

11. Verfahren zur Granulierung einer Metallschmelze in einer Vorrichtung nach einem der Ansprüche 1 bis 10,
**dadurch gekennzeichnet,**
**daß** der runde Wasserbehälter (2) mit Wasser befüllt und das Wasser im Behälter in Rotation versetzt wird, indem eine Teilmenge des Wassers im Kreis geführt und in der Höhe und am Umfang des Wasserbehälters verteilt mit Hilfe wenigstens einer Wasserdüse (8) tangential in den Wasserbehälter eingedüst wird, wobei das rotierende Wasser eine parabolisch geformte Oberfläche (16) annimmt und die wenigstens eine Düse (8) an der Behälterwand so befestigt ist, daß sie das Wasser in einem breiten Fächer nahe der parabolischen Oberfläche (16) dem Wasserbehälter zuführt und wobei die Metallschmelze aus einem Schmelztiegel in einem ununterbrochenen Strahl in den von der ersten Wasserdüse gebildeten Wasserfächer gegossen wird bis der Schmelztiegel entleert ist.

12. Verfahren nach Anspruch 11,
**dadurch gekennzeichnet,**
**daß** die für das Verfahren eingesetzte Wassermasse etwa 5 bis 50 mal so groß ist wie die zu granulierende Masse der Metallschmelze im Schmelztiegel.

13. Verfahren nach Anspruch 12,
**dadurch gekennzeichnet,**
**daß** die im Kreis geführte Teilmenge des Wassers so bemessen ist, daß die Gesamtmenge des Wassers im Wasserbehälter (2) in etwa 0,5 bis 5 Minuten einmal vollständig umgewälzt wird.

14. Verfahren nach Anspruch 12,
**dadurch gekennzeichnet,**
**daß** die Ausströmgeschwindigkeit des Wassers aus der ersten Düse (8) 0,5 bis 5 m/s beträgt.
